(19) Europäisches Patentamt
European Patent Office
Office européen des brevets

(11) Publication number: 0 228 757 B1

(12) EUROPEAN PATENT SPECIFICATION

(45) Date of publication of the patent specification: 09.05.90

(51) Int. Cl.⁵: H01M 2/08, H01M 6/16 // H01M4/40, H01M4/50

(21) Application number: 86304583.7

(22) Date of filing: 13.06.86

# (54) Flat cell.

(30) Priority: 10.12.85 JP 277432/85

(43) Date of publication of application: 15.07.87 Bulletin 87/29

(45) Publication of the grant of the patent: 09.05.90 Bulletin 90/19

(84) Designated Contracting States: CH DE FR GB LI

(56) References cited:
EP-A- 0 150 054

Patent Abstracts of Japan, unexamined applications, field E, vol. 8, no 194, September 6, 1984 - The Patent Office Japanese Governement - page 101 E 264

(73) Proprietor: SEIKO ELECTRONIC COMPONENTS LTD., 30-1, Nishitaga 5-chome, Sendai-shi Miyagi(JP)

(72) Inventor: Kishi, Iwao Seiko Electronic Components Ltd., 30-1, Nishitaga 5-chome, Sendai-shi Miyagi(JP)
Inventor: Harada, Toyoo Seiko Electronic Components Ltd., 30-1, Nishitaga 5-chome, Sendai-shi Miyagi(JP)
Inventor: Takeda, Kazutoshi Seiko Electronic Components Ltd., 30-1, Nishitaga 5-chome, Sendai-shi Miyagi(JP)
Inventor: Aihara, Hiroaki Seiko Electronic Components Ltd., 30-1, Nishitaga 5-chome, Sendai-shi Miyagi(JP)
Inventor: Arakawa, Tatsuo Seiko Electronic Components Ltd., 30-1, Nishitaga 5-chome, Sendai-shi Miyagi(JP)
Inventor: Kamata, Nobuo Seiko Electronic Components Ltd., 30-1, Nishitaga 5-chome, Sendai-shi Miyagi(JP)

(74) Representative: Caro, William Egerton et al, J. MILLER & CO. Lincoln House 296-302 High Holborn, London WC1V 7JH(GB)

EP 0 228 757 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to flat cells.

The prior art relating to the present invention involves a technique of a flat cell in which laminated electric power generating elements are held between a pair of sheet-like metal terminal plates having a predetermined profile, and an annular insulating member is interposed between the respective peripheral edges of these terminal plates so that the electric power generating elements are hermetically sealed. In a cell which employs an active light metal such as lithium as a negative active material, lithium and water vapour react with each other to generate hydrogen gas, causing internal pressure of the cell to rise. Therefore, the above described annular insulating member must be designed so as not to become defective as a result of such rise in the cell internal pressure. In Published Japanese Patent Application No. 83340/1984, maleic anhydride modified polyethylene resin is employed as the annular insulating member and bonded to the terminal plates by hot-plate pressure bonding, inpulse bonding, ultrasonic bonding, etc. In this prior art, a separator which is made from polypropylene nonwoven fabric is interposed between the positive active material and the negative active material, i.e. lithium.

The use of only maleic anhydride modified polyethylene resin as a sealing member, however, has led to the occurrence of short-circuiting between a positive terminal plate and a negative terminal plate when the peripheral portion of the cell is heat sealed under pressure.

Further, since it is difficult to make uniform the thickness of the heat sealed portion of the periphery of the cell, the prior art involves the disadvantage of reduction in the sealing properties of the cell. Because the sealing member is heat sealed under pressure at at least the melting point of the material of the annular insulating member, there may be variations in the amount of the sealing member along the periphery of the cell.

The present invention seeks to provide (a) a flat cell which has greatly improved sealing properties and hence excellent long term reliability, (b) a flat plate type lithium cell in which short circuiting is prevented from occurring inside the cell and the sealing area along the outer periphery of the cell, (c) a stable flat plate type lithium cell which bulges less even when stored or used over a long period of time, and (d) a flat cell which may be applied to IC cards, and so has a thickness of less than 0.05 mm, a large capacity and battery life over five years. Such IC cards are used, for example, in thin type deck top calculators, watches, greeting cards, etc.

According to one aspect of the present invention there is provided a flat cell comprising a positive terminal plate, positive material, a separator, an electrolyte, a negative material, a sealing member between a negative terminal plate and the positive terminal plate, characterised in that said sealing member is a two material three-layer film formed from a maleic acid modified polyethylene resin/a high density polyethylene resin/a maleic acid modified polyethylene resin, the graft ratio of maleic acid being 0.05% to 0.2%, the maleic acid modified polyethylene resin layers each having a thickness of at least 20 $\mu$m.

Said maleic acid modified polyethylene resin may be an intermediate density polyethylene which is graft-polymerised with 0.05 to 0.20% maleic acid.

Preferably the maleic acid modified polyethylene resin in said sealing member has a thickness from 25 to 30 microns, and the high density polyethylene resin in said sealing member has a thickness of 50 to 200 $\mu$m.

Said two material three-layer film may be produced by an inflation method.

In one embodiment said positive material is manganese dioxide ($MnO_2$), said electrolyte is lithium chlorate ($LiClO_4/PC$), and said negative material is lithium.

Said positive terminal plate and negative terminal plate may have different external dimensions.

Said separator may be constituted by two strips of polypropylene non-woven fabric. Thus said separator may be produced by micro-spun bond.

Preferably said sealing member clamps said separator.

According to a further aspect of the present invention there is provided a method of manufacturing a flat cell characterised by comprising the steps of: (a) thermo-welding a first sealing member to the peripheral portion of an inner surface of the negative terminal plate; (b) contact bonding a lithium foil to said negative terminal plate; (c) mounting the separator on said lithium foil; (d) mounting a positive material sheet on said separator after said sheet has been dipped in the electrolyte; (e) thermowelding a second sealing member to the positive terminal plate; (f) mounting said positive terminal plate on said positive material sheet; and (g) thermo-welding said first sealing member and the second sealing member, thereby hermetically sealing the flat cell.

Said separator may be constituted by two strips of polyethylene non-woven fabric.

Said positive material may be reacted with an electrolyte. The reaction may be at 100 to 120°C for 15 hours.

The method may include the step of external shaving after said cell has been assembled and sealed.

Additionally or alternatively, the method may include the step of discharging the cell preliminarily after it has been assembled and sealed. The amount by which said cell is discharged is preferably about 5% of its theoretical capacity.

Said positive and negative terminal plates may be subjected to drawing.

The invention is illustrated, merely by way of example, in the accompanying drawings, in which:

Figure 1 is a sectional view of a flat cell according to the present invention;

Figure 2 is an enlarged sectional view of a sealing portion of the flat cell of Figure 1;

Figure 3 (A) and 3 (B) are plan and sectional views respectively of embodiments of a drawn metal terminal plate of the flat cell of Figure 1;

Figure 4 is a graph showing the relationship between storage time (days) and open-circuit voltage of the flat cell of Figure 1;

Figure 5 is a graph showing the relationship between temperature at which positive material has been treated by electrolyte. and bulge of the flat cell of Figure 1;

Figure 6 shows, in plan and sectional views, a flat cell according to the present invention before and after external shaving; and

Figure 7 is an external sectional view of the peripheral edge of a flat cell according to the present invention before and after external shaving.

Figure 1 is a sectional view of a flat cell according to the present invention. The size of this cell is 23 × 28 × 0.5 mm (CS 2328, open-circuit voltage $V_{oc}$ 3V, nominal capacity 30 mAh).

Reference numeral 1 denotes a positive terminal plate which also serves as a current collector. The positive terminal plate 1 is made of SUS430, SMOMAC30-2 or the like and has a thickness of 30 µm. Reference numeral 6 denotes a negative terminal plate which also serves as a current collector.

Reference numeral 3 denotes a positive mixture sheet which is brought into contact with the inner surface of the positive terminal plate 1. This sheet 3 is formed by mixing manganese dioxide ($MnO_2$), an electrically conductive material and a binder into a core material made from a stainless steel net and applying a pressure to this mixture so that it is reduced in thickness and has a high density.

Reference numeral 4 denotes a separator which is interposed between the positive mixture sheet 3 and a lithium negative active material 5 such as lithium.

As illustrated, preferably the peripheral portion of the separator 4 is clamped by a positive sealing member 2 and a negative sealing member 7, whereby short-circuiting is prevented from occurring through the separator 4 and at the outer periphery portion thereof. Thus, the area between the respective peripheral edges of the positive terminal plate 1 and the negative terminal plate 6 is hermetically sealed by the combination of the positive sealing member 2 and the negative sealing member 7.

Figure 2 is an enlarged view of a sealing portion of the flat cell according to the present invention as shown in Figure 1. Each of the sealing members 2,7 is a two-material three-layer film of maleic acid modified polyethylene resin/high-density polyethylene resin/maleic acid modified polyethylene resin which is produced by an inflation method. Reference numerals 2a, 7a in Figure 2 denote a maleic acid modified polyethylene, and reference numerals 2b, 7b denote high-density polyethylene.

Preferably the maleic acid modified polyethylene resin employed is prepared by graft-polymerising maleic acid to an intermediate-density polyethylene. The optimum graft ratio of maleic acid is 0.05 to 0.2%. A graft ratio of maleic acid in excess of 0.2% increases the permeability to moisture, and such material is therefore unsuitable as a sealing material for the lithium flat cell. On the other hand, a graft ratio of maleic acid not greater than 0.05% degrades the adhesion to the positive and negative terminal plates 1,6, so that such material cannot function as a sealing material. This maleic acid modified polyethylene film has a thickness of 30±5 µm, a melting point (DSC method) of 120°C, a melt index (JIS K6760) of 0.3 (g/10 min) and a density (JIS K6760) of 0.91 (g/cm$^3$). When this film has an excessively small thickness, the resin may flow and leak out of the sealing portion of the cell during heat sealing, resulting in an increase in the rate of occurrence of sealing failure. It has been found experimentally that the film needs to have at least a thickness of 20 microns. When the thickness of the film is excessively large, the resin can sufficiently perform sealing even when a portion of the resin flows out due to heat and pressure during heat sealing. However, an excessively large film thickness if not preferable from the viewpoint of prevention of intrusion of moisture from the outside of the cell. This is because a polyethylene which is graft-polymerised with maleic acid has a larger permeability to moisture than that of a polyethylene which is not graft-polymerised with maleic acid although the former has improved adhesion to metal.

In short, it is important that the film thickness has necessary minimum thickness with the view to making uniform the thickness of the heat sealed portion and ensuring the required sealing properties.

An explanation will be made below about the high-density polyethylene film employed in the present invention. Since this high-density polyethylene film is not graft-polymerised with acrylic acid, it has no adhesion to metal and just serves as a spacer for maintaining the distance between the positive and negative terminal plates, that is, the thickness of the sealing portion of the cell.

The thickness of this film may be set as desired in accordance with the thickness of the cell. Since the thickness of the cell in accordance with this embodiment of the present invention is 0.5 mm, the thickness of this film is suitably set so as to fall between 50 and 200 µm. This film has a melting point (DSC method) of 129°C, a melt index (JIS K6760) of 0.6 (g/10 min) and a density (JIS K6760) of 0.95 (g/cm$^3$).

The melt index is an index which represents the fluidity of resins. The larger the number of the index, the lower the fluidity. More specifically, since this high-density polyethylene is the same type of polyethylene as the maleic acid modified polyethylene and is therefore heat-fusible, it involves no danger of moisture entering through the bonded area. In addition, the melting point of this polyethylene is 90°C higher than that of the maleic acid modfied polyethylene and is less fluid. It is, therefore, possible for

this film to serve as an excellent spacer. Further, since this film is not graft-polymerised with maleic acid, it is less permeable to moisture and, therefore, capable as serving as an excellent sealing material.

Comparison was made as to the ratio of short-circuiting failure between the sealing member, between a two-material three-layer film of a cell according to the present invention and a conventional sealing member, being a one-layer film. The results are shown in Table 1 below (Data n = 100).

Table 1

| | Ratio of short-circuiting failure (%) |
|---|---|
| Cell of the invention | 0% |
| Conventional cell | 37% |

As will be clear from Table 1, the cell according to the present invention can prevent the occurrence of short-circuit failure in an excellent manner.

The reason why the cell according to the present invention has such excellent properties is that the sealing member has a two-material three-layer structure in which maleic acid modified polyethylene resin is disposed on opposite sides of a high-density polyethylene resin. That is, since the melting point of high-density polyethylene resin is about 10°C higher than that of maleic acid modified polyethylene resin, in the case where the maleic acid modified polyethylene resin reaches melting point and begins to melt and becomes soft, the high-density polyethylene resin does not become soft and it functions as an electrically insulating material.

Further, comparison was made as to moisture permeability between the sealing member of a cell according to the present invention and a conventional sealing member. The test was carried out as follows: a cell was made as shown in Figure 1 and was heat-sealed with only 200 micro-litres electrolyte in place of electric power generating elements. This cell which contained only electrolyte was stored in a thermo-hygrostat at 80°C and relative humidity (R.H.) of 90 to 95% for 10 days, and moisture which is collected from 100 micro-litres electrolyte of the cell by microsyringe were examined by a moisture-meter. The results are shown in Table 2 below (Data n = 24).

Table 2

| | $\bar{x}$ | R |
|---|---|---|
| Sealing member of the invention | 200 ppm | 100 ppm |
| Conventional sealing member | 1000 ppm | 500 ppm |

In Table 2, $\bar{x}$ is the average value of data n = 24, and range (R) can be defined as R represents the difference between the maximum and minimum values of data wherein the electrolyte is propylene carbonate dissolved in 1 mol lithium chlorate ($LiClO_4$) and this electrolyte contains 15 ppm of moisture.

As will be clear from Table 2, the sealing of a cell according to the present invention can be effected more reliably because a maleic acid modified polyethylene of increased moisture permeability than that of high-density polyethylene, is used.

Next, comparison was made as to the ratio of short-circuiting failure between a sealing member thermo-welded to each of the positive and negative terminal plates in advance and a sealing member which is not thermo-welded. The results are shown in Table 3 below. (Data n = 100).

Table 3

| | Ratio of short-circuiting failure (%) |
|---|---|
| Cell of the invention | 0% |
| Conventional cell | 100% |

As will be clear from Table 3, the cell according to the present invention can prevent short-circuiting failure compared to the conventional cell.

Employment of the sealing material of the type described above offers the following advantages.

1. Since the two surfaces of the film are the same as each other, it is not necessary to discriminate between the bonding layer surface (the maleic acid modified polyethylene side) and the non-bonding layer surface (the high-density polyethylene side).

2. If the sealing material is thermo-welded to each of the positive and negative thermal plates in advance, when heat sealing is carried out after electric power generating elements have been inserted in the cell, sealing can be effected more easily and more reliably since the films of maleic acid modified polyethylene, which has a lower melting point and better adhesion than those of high-density polyethylene, are bonded to each other.

3. It is possible to effect heat sealing at a relatively low temperature within a relatively short period of time, so that it is possible to reduce the thermal damage to and thermal deterioration of the lithium, organic electrolyte, separator and positive active material contained in the lithium flat cell.

Preferably the two-material three-layer film serving as the sealing member in a flat cell according to the present invention is produced by an inflation method.

The following is an explanation of the reasons why the twomaterial three-layer laminated film serving as the sealing member is produced by an inflation method.

General film manufacturing methods includ (1) a T-die method and (2) an inflation method. The T-die method enables a film to be manufactured at relatively low cost and is therefore widely used. The T-die method suffers, however, from the following disadvantage. Since this method involves uniaxial stretching, the thermal shrinkage coefficient and the thermal expansion coefficient in the longitudinal direction and those in the lateral direction differ from one another when heat is applied to the film, which means that, when the film produced by the T-die method is employed as a sealing manner, the sealing width differs for the two directions. It is a matter of course that the sealing properties are degraded in a direction in which the sealing width is narrowed.

On the other hand, the inflation method includes biaxial stretching and therefore allows the film to be isotropic in terms of the thermal shrinkage coefficient and the thermal expansion coefficient when it is heated and cooled, although this is a costly film manufacturing technique.

Accordingly, the film produced by the inflation method allows the sealing width at any position to be the same as that at all other positions. Thus, it is possible to control the width of the sealing member and the sealing width so that they are uniform.

Preferably, the sealing member is thermo-welded to each of the positive and negative terminal plates in advance. The reason why the sealing member is thermo-welded will be explained below. By doing so, there is no fear of the lithium, having a melting point of 170°C, being fused, or the organic electrolyte being thermally decomposed. More specifically, since an amount of heat and a magnitude of pressure which are adequate for the thermo-welding can be applied for an adequate period of time, the adhesion between the positive and negative terminal plates and their respective sealing members become complete.

In a preferred embodiment, the positive terminal plate 1 is subjected to drawing in advance and has square or circular notches in the respective four corners along the outer periphery thereof, that is, the plate having phessed portion is manufactured in the shape of a square.

Figure 3(A) shows in front and plan views one example of a metal terminal plate which has been subjected to drawing. In Figure 3(A), the reference letter A denotes a round portion of the drawn part of the metal terminal plate having been subjected to drawing, $\underline{d}$ denotes the draw depth, $l_1$ denotes the outside dimension of the drawn part, $l_2$ denotes the inside dimensions of the drawn part, and θ represents the angle of inclination of the drawn part which is represented by tan

$$\theta = \frac{l_1 - l_2}{d}.$$

The external dimensions of this metal terminal plate are 23 × 28 mm, the drawn depth 0.16 mm, $l_1$ 18 × 23 mm, $l_2$ 16 × 21 mm, and θ = 80.9°. The length of the radius of the rounded portions is 3 mm.

Comparison was made as to the longterm reliability between a cell according to the present invention (shown in Figure 1) employing the positive terminal plate 1 shown in Figure 3(A) and a conventional cell employing a positive terminal plate not having been subjected to drawing. The test was carried out in such a manner that the cells were stored in a thermo-hygrostat at 60°C and the R.H. of 90 to 95%, and changes in the open-circuit voltage ($V_{OC}$), the internal resistance (Ri) and thickness (H) were examined. The results are shown in Table 4 below (Data n = 24).

Table 4

| | Storage time (days) / characteristics | 0 | | 20 | | 40 | | 60 | | 80 | | 100 | |
|---|---|---|---|---|---|---|---|---|---|---|---|---|---|
| | | $\bar{x}$ | R | $\bar{x}$ | R | $\bar{x}$ | R | $\bar{x}$ | R | $\bar{x}$ | R | $\bar{x}$ | R |
| Cell of the invention | Voc (V) | 3.08 | 0.01 | 3.23 | 0.02 | 3.25 | 0.02 | 3.27 | 0.02 | 3.27 | 0.03 | 3.28 | 0.04 |
| | Ri (Ω) | 24 | 6 | 29 | 8 | 59 | 24 | 80 | 28 | 191 | 90 | 241 | 110 |
| | H (mm) | 0.47 | 0.01 | 0.47 | 0.01 | 0.48 | 0.01 | 0.49 | 0.01 | 0.52 | 0.08 | 0.57 | 0.11 |
| Conventional cell | Voc (V) | 3.08 | 0.02 | 3.23 | 0.03 | 3.28 | 0.04 | 3.28 | 0.05 | 3.30 | 0.07 | 3.32 | 0.09 |
| | Ri (Ω) | 25 | 7 | 62 | 27 | 86 | 35 | 198 | 87 | 235 | 105 | 354 | 152 |
| | H (mm) | 0.47 | 0.03 | 0.48 | 0.04 | 0.50 | 0.04 | 0.53 | 0.07 | 0.56 | 0.10 | 0.61 | 0.15 |

In Table 4, $\bar{x}$ represents a mean value ofthe data n = 24, and R represents the difference between the maximum and minimum values of the data. As will be clear from Table 4, the cell according to the present invention has stable $V_{OC}$, small rise in Ri and small increase in H as compared with the conventional cell.

The reason why the cell according to the present invention has such excellent storage properties is that either the positive or negative terminal plate of the cell of the present invention is subjected to drawing in advance, and there is, therefore, no fear of any immoderate force acting on the sealing portion along the periphery of the cell in contrast to conventional cells employing sheet-like terminal plates, whereby it is possible to maintain excellent sealing properties.

Figure 3(B) shows in plan and front views another example of a metal terminal plate which has been subjected to drawing. The size of a lithium flat cell shown in Figure 3(B) is 40 × 40 × 0.5 mm (CS 4040).

In Figure 3(B), reference letter B denotes a round portion of a drawn part of the metal terminal plate having been subjected to drawing, d denotes the drawing depth, $l_1$ denotes the outside dimensions of the drawn part, $l_2$ denotes the inside dimensions of the drawn part, and θ denotes the angle of inclination of the drawn part which is represented by tan θ =

$$\theta = \frac{l_1 - l_2}{d}.$$

The external dimensions of this metal terminal plate are 40 × 40 mm, the drawn depth 0.16 mm, $l_1$ 32 × 32 mm, $l_2$ 30 × 30 mm, and θ = 80.9°. The length of the radius of the rounded portions is 5 mm.

Since the laminated electric power generating elements are incorporated in a hermetically sealed space inside the cell defined by the drawn positive terminal plate and the negative terminal plate, the sealing portion along the periphery of the cell is not subject to any immoderate force, and it is possible to effect sealing with excellent adhesion between the terminal plates and the sealing members. It is only necessary to draw either the positive or negative terminal plate. Thus there is no danger of the sealing properties deteriorating, and the inner wall of the drawn part can serve as an insertion guide when the electrical power generating elements are inserted.

In addition, provision of a rounded portion of 3 mm or more at the corners of the outer periphery of the positive and negative terminal plates and of the drawn part enables a metal foil with a small thickness, i.e., 30 to 50 µm, to be drawn without breakage, distortion, wrinkling and other similar defects.

In order to reduce the overall thickness of the cell to less than 0.5 mm and to maximise cell capacity, the plate thickness is selected so as to fall in the range between 30 and 50 µm which involves no pinhole and which provide adequate strength for practical use.

When, in order to set the overall thickness of the cell at 0.5 mm, the simple stacking dimension of the cell components and the electrical power generating elements is set at 0.45 mm and the thickness of each of the positive and negative terminal plates is set at 30 µm and, further, the thickness of each of the annular sealing members is set at 100 µm, the drawn depth of the positive or negative terminal plate is 0.16 mm.

Drawing experiments have been carried out using a metal foil of 30 µm thickness. The employed metal foil was nickel, SUS304, SUS430 or SHOMAC30-2. When the external dimensions were 40 × 40 mm and the dimensions of the drawn part were 32 × 32 mm, the drawn depth was 0.16 mm. Examination was made as to whether or not there was any breakage of the metal foil and as to whether or not the rounded portions or the peripheral portion of the metal terminal plate had any warp, wrinkle or distortion after drawing, for different dimensions of the rounded portion.

As a result, when the size of the rounded portions was 3 mm or less, the metal foil was broken at the drawn part. When the rounded portions was 3 to 4 mm long, warp, wrinkle and distortion were produced at the periphery of the metal terminal plate. When the size of the rounded portions was 5 mm, favourable results were found, that is, the metal foil was not broken, and no warp, wrinkle or distortion was found at the peripheral portion of the metal terminal plate.

When the external dimensions of the metal terminal plate were 23 × 28 mm and the dimensions of the drawn part were 16 x 21 mm, the drawn depth was 0.16 mm.

Then, examination was made as to whether or not there was any breakage in the metal foil and so to whether or not the rounded portions or the peripheral portion of the metal terminal plate had any warp, wrinkle or distortion after drawing, for different dimensions of rounded portions. As a result, when the size of the rounded portions was 1 mm and 2 mm, the drawn part was broken, and warp, wrinkle and distortion were produced at the peripheral portion of the metal terminal plate. When the size of the rounded portions was 3 mm, the metal foil was not broken, and no warp, wrinkle or distortion was found at the peripheral portion of the metal terminal plate.

As has been described above in detail, it is possible to greatly improve the sealing properties and enhance the longterm reliability by a large margin by employing a positive terminal plate and a negative terminal plate either of which has been subjected to drawing such that a rounded portion of 3 mm or more is formed at each of the corners of the drawn part.

In a preferred arrangement, the size of the positive terminal plate 1 of the cell A may be set so that the terminal plate 1 is larger than the projecting portion of each of the positive and negative sealing members

2,7. By doing so, the external dimensions of this positive terminal plate 1 enable positioning to be effected, and the positive terminal plate 1 can be shaved so that predetermined external dimensions are obtained.

The reason why the positive and negative terminal plates 1,6 have different external dimensions will be explained below. One of the reasons is to prevent the positive and negative terminal plates 1 and 6 from short-circuiting with each other when heat sealing is carried out for sealing the cell. This short-circuiting occurs because the highest pressure is applied to the outermost peripheral portion of the cell when subjected to heat and sealing and because the positive and negative terminal plates 1,6 have burrs produced as a result of the pressing operation.

Another reason is that, when the positive and negative terminal plates 1,6 are simultaneously blanked when the cell is subjected to external shaving, burrs which are produced as a result of blanking may contact the positive and negative terminal plates 1,6 to cause a short-circuit.

In a preferred embodiment, a separator may be formed by rolling two overlaid strips of polypropylene nonwoven fabric of 20 $g/m^2$ in weight. The thickness of each strip of polypropylene nonwoven fabric before rolling is 60 microns, and two strips of such fabric are overlaid one upon the other and rolled so that the overall thickness is 80 microns. The rolled separator of the two-layer structure is of 40 $g/m^2$ in weight. The nonwoven fabric is manufactured by micro-spunbond and treated with an anion surface active agent before pressing. If this nonwoven fabric is not treated with an anion surface active agent, it will have poor wetting to the electrolyte. As a result, impedence of the battery increases.

The reason why the arrangement employs such a specially fabricated separator is to prevent occurrence of a short-circuit between lithium serving as the negative active substance and the positive active substance through the separator when the cell is strongly pressed from the upper and lower sides thereof.

Figure 4 is a graph showing the result of measurement of open-circuit voltage of cells employing various separators when they are stored at 80°C and R.H. of 90 to 95% under an external pressure of 10 $kg/cm^2$ ($9.8 \times 10^2$ KPa) applied to the upper and lower sides thereof. In the graph: A represents the separator in accordance with the present invention, C represents nonwoven fabric formed by polypropylene of 120 μm in thickness and 37 $g/m^2$ in terms of METSUKE, and B represents a single-layer polypropylene nonwoven fabric having a thickness of 50 μm and a fibre density of 20 $g/m^2$.

In Figure 4, n represents a mean value for the data n = 24.

As shown in Figure 4, the open-circuit voltage of cell A and the conventional cell C have good results but the open-circuit voltage of the conventional cell B falls and produces bad results. The reason why goods results of cells A and C is achieved is by preventing contact between the lithium active material and the positive active material through the separator so that short-circuiting does not occur. On the other hand, the separator of cell C is 120 microns thick so the cell has the disadvantage that its thickness is increased.

The cell A uses a thin separator of 80 μm in thickness, however, and so short-circuiting does not occur through the separator.

The reason why good results are achieved is as follows. The separator of a cell according to the present invention is manufactured by laminating two nonwoven fabrics by roll pressure. As composed two nonwoven fabrics, the position of the pores are shifted relative to each other so this prevents contact between the lithium active material and the positive active material.

Since the thickness of a cell according to the present invention is 0.5 mm, it is necessary to minimise the thickness of the separator for the purpose of increasing cell capacity. The thickness of a single layer separators, i.e. 50 microns, undesirably allows short-circuiting to occurr through the separator. On the other hand, a separator with a thickness of 120 microns prevents short-circuiting through the separator but undesirably increases the thickness of the cell as a whole and is therefore unsuitable for a thin cell according to the present invention.

The reason why the separator in accordance with the preferred arrangement is effective in prevention of short-circuiting is that, since two strips of nonwoven fabric have a relatively large value of METSUKE are laid one upon the other and rolled to form the separator, no through-holes (pinholes) are present in the separator and by-pass passages may be formed instead. In addition, since possible through-holes in the two layers of the separator are offset from each other by laying the two strips of nonwoven fabric one upon the other, there is no through-hole which extends straight through the two strips.

For the purpose of further reducing the thickness of the separator, a micro-porous polypropylene film having a thickness of 25 microns and condenser paper having a thickness of 10 to 50 microns were experimentally used. These materials, however, caused the internal resistance of the cell to increase to several KΩ. Therefore, they cannot be used in practice in a cell according to the present invention. The reason why the internal resistance is increased is that, since the cell according to the present invention can contain only a very small amount of electrolyte if it is to be thin, the separator cannot become sufficiently wet.

In a preferred arrangement, the peripheral portion of the separator is claimed between the positive and negative sealing members as shown in Figure 1. Since the material for the separator is polypropylene and the material for the sealing members is polyethylene, the separator and the sealing members are

thermowelded and therefore secured together during the heat sealing. By securing the peripheral portion of the separator between the sealing members in this way, it is possible to prevent deterioration of lithium as the negative active substance by migration of the positive active substance, even when the positive active substance spills during storage or usage of the cell over a long period of time.

In addition, even when the positive active substance and the negative active substance undesirably become offset from each other, they are prevented from contacting each other. In particular, when the cell of the present arrangement is bent, it still exhibits advantageous effects.

The following is a description of a method of manufacturing a flat plate-type lithium cell according to the present invention.

A positive mixture sheet 3 containing manganese dioxide as a main body is inserted and mounted on the inner side of the positive terminal plate 1 having external dimensions of 27 × 32 mm. The separator 4 is then mounted on the positive mixture sheet 3.

Preferably this positive mixture sheet 3 is treated with electrolyte before it is incorporated in the cell. This treatment is carried out as follows. One hundred positive mixture sheets 3 are prepared and dipped in 50 cc of an electrolyte of 1 mol $LiClO_4$/propylene carbonate (PC). After the treating vessel has been sealed hermetically, heat treatment is carried out at 120°C for 15 hours. After the heat treatment, the positive mixture sheets are taken out and dipped in 50 cc of another new electrolyte at room temperature for more than 30 minutes, whereby the old electrolyte contained in the positive mixture sheets is replaced with the new electrolyte.

The positive mixture sheets treated with the new electrolyte are taken out and used as a positive active substance for the cell.

The relationship between this electrolyte and the theoretical capacity of manganese dioxide to be treated is represented by "the theoretical capacity of $MnO_2$ to be treated"/"the amount of required electrolyte" = 50 to 100 mAh/cc.

The following is an explanation of the reason why the positive active substance is reacted with the electrolyte in advance in this arrangement. It has heretofore been known that ethylene carbonate and MnO2 react with each other to generate carbon dioxide according to the following equation:

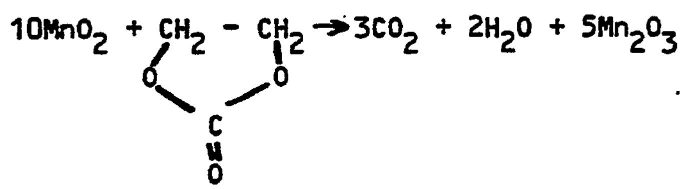

The above equation is described in Blomgren, G.E. (1983) "Lithium Batteries" (J.P. Gabano, ed.) P22, Academic Press, New York and London, for example.

In the preferred arrangement, in the present case, the generation of gas by the reaction between $MnO_2$ and electrolyte is prevented by appropriately setting conditions for reaction between the positive mixture sheet and the electrolyte constituted by polypropylene carbonate (PC) containing 1 mol $LiClO_4$.

Figure 5 is a graph showing the relationship between the temperature and time for reaction between the positive mixture sheet and the electrolyte and the amount by which the cell bulges.

Each of the cells employed in the experiment was formed in such a manner that the positive mixture sheet was treated in electrolytes at 80°C, 100°C and 120°C and 15 hours each and then sealed in the cell, together with the separator and the electrolyte.

After this cell was stored for 5 days in a thermo-hygrostat under conditions where the temperature was 80°C and the relative humidity (R.H.) was 90%, the different between the thickness of the cell measured before and after the storage was obtained, and the calculated difference was defined as the amount by which the cell bulged. One unit of the bulge of the cell equals 0.01 mm.

It will be understood from the graph shown in Figure 5 that it is preferable to treat the positive mixture sheet with electrolyte at 100°C or higher. As to the treating time, 15 hours is preferable to 3 hours. In practice, conditions of 100°C for 15 hours and 120°C for 15 hours are suitable.

The reason why an advantageous effect is offered by making the positive mixture sheet and the electrolyte react with each other in advance is presumed because the active portion in $MnO_2$ contained in the positive mixture sheet is deactivated through the reaction with the electrolyte.

With the reaction conditions according to the arrangement, there is no risk of electrical capacity of the $MnO_2$ decreasing, and there is, therefore, no fear of the cell capacity decreasing.

A reaction at 140°C or higher disadvantageously causes the cell capacity to decrease.

Preferably the separator 4 is integrally formed by rolling two strips of polypropylene nonwoven fabric of 20 g/m² in terms of METSUKE (weight per m²) which are laid one upon the other and thereby bonding them together as one unit. The outer periphery of this separator 4 is clamped and thereby secured between the sealing members 2,7. When the outer peripheral portion of the cell is subjected to heat sealing, the outer peripheral portion of the separator 4 is also thermo-welded to the sealing members 2 and 7, whereby it is even more reliably secured.

Lithium, which serves as the negative active material 5, is contact-bonded to the inner side of the negative terminal plate 6. This negative terminal plate 6 is made of nickel, aluminium, stainless steel or the like and has external dimensions of 22 × 27 mm and a thickness of 30 μm.

Each of the sealing members 2,7 is a three-layer film composed of two different kinds of material, i.e., maleic acid modified polyethylene of 30±5 μm and a high-density polyethylene of 60±5 μm. The sealing members 2,7 are respective thermowelded to the inner surfaces of the outer peripheries of the positive and negative terminal plates 1,6 respectively in the manner described below.

The positive terminal plate 1 and the positive sealing member 2 (the outside dimensions: 23 × 28 mm; the inside dimensions: 16.6 × 21.6 mm) are laid one upon the other so that they are not offset from each other, and contact-bonded by pressing a hot plate against the positive terminal plate 1. The temperature at this time is 160±10°C, while the pressure is 2±0.5 kg/cm² (196 ± 49 KPa), and the press time is 3 to 5 seconds.

The positive terminal plate 1 and the positive sealing member 2 thus bonded together in one unit are heated in a vacuum ($10^{-2}$ mmHg) (1.3 Pa) at 200°C for 10 minutes, whereby the positive terminal plate 1 and the positive sealing member 2 can be thermo-welded together even more rigidly and reliably.

Similarly, the negative terminal plate 6 and the negative sealing member (the outside dimensions: 22 × 27 mm; the inside dimensions: 16 × 21 mm) are thermo-welded together.

The components of the cell are assembled in the following manner. With the negative terminal plate 6 placed first, the lithium, the separator 4 and the positive mixture sheet 3 are successively inserted and laminated. Then, the positive terminal plate 1 is mounted so as to cover the laminated components, and heat sealing is effected along the peripheral edges of the positive and negative terminal plates 1,6, whereby the cell is completely hermetically sealed.

Preferably, the positive and negative terminal plates 1,6 have different dimensions. This is possible to prevent short-circuiting at the peripheral edges of these plates during this heat sealing.

Further, in a preferred arrangement the cell is subjected to external shaving.

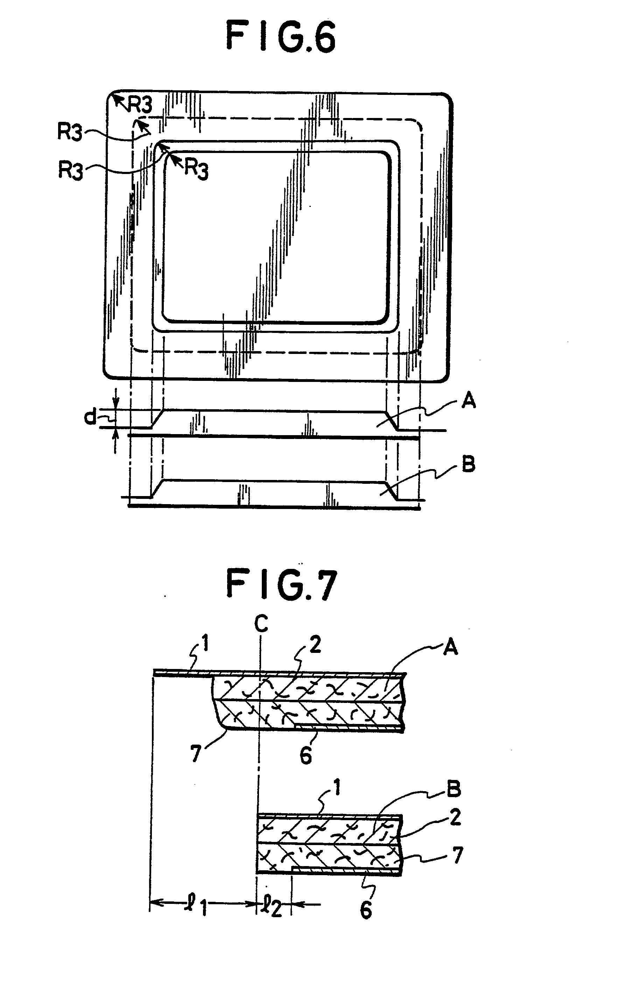

Figure 6 shows in plan and sectional views the cell before and after external shaving. Reference letter A in Figure 6 denotes the cell before external shaving which has external dimensions of 27 × 32 mm, and reference letter B denotes the cell after external shaving which has external dimensions of 23 × 28 mm.

Since the external dimensions of the assembled cell are the same as the external dimensions of the positive terminal plate 1, i.e., 27 × 32 mm, the cell is subjected to external shaving so as to have external dimensions of 23 × 28 mm, as shown in Figure 6.

Figure 7 is an enlarged view of the peripheral edge of the cell shown in Figure 6 before and after the external shaving. The reference letter A in Figure 7 denotes the cell before external shaving, and the reference letter B denotes the cell after external shaving. When the cell A is cut along the cut-line C, the cell B with predetermined dimensions is obtained. The reference symbol $l_1$ in this figure represents a length by which the cell A is cut. It suffices to set $l_1$ at least to about 2 mm. When $l_1$ is set such as to be excessively large, the amount of material which is cut and discarded increases, and this leads to a waste of material.

In the cell B having been subjected to external shaving, the positive and negative terminal plates 1,6 still have different external dimensions, that is, their respective peripheral edges are offset from each other by $l_2$. There is, therefore, no danger of the positive and negative terminal plates 1,6 short-circuiting with each other during external shaving. The offset amount $l_2$ is suitably set so as to fall between 0.3 and 0.5 mm.

As has been described above, since the flat plate type lithium cell according to the present arrangement is subjected to external shaving, it is possible to effectively prevent the following phenomena which might otherwise occur: the sealing member which projects beyond a predetermined dimension adheres to the surface of the outer peripheral edge of the positive or negative terminal plate to increase the thickness, degrade the external appearance or make it impossible to obtain electrical contact.

Preferably the sealing member is thermo-welded to each of the positive and negative terminal plates in advance.

The reasons why the sealing member is thermo-welded to each of the positive and negative terminal plates in advance will be explained below. By doing so, there is no fear of the lithium, having a melting point of 170°C, being fused, or the organic electrolyte being thermally decomposed. More specifically, since an amount of heat and a magnitude of pressure which are adequate for the thermo-welding can be applied for an adequate period of time, the adhesion between the positive and negative terminal plates and their respective sealing members becomes complete.

In a preferred arrangement, after the interior components of the cell have been inserted therein, the outer peripheral portion of the cell is sealed by heat sealing. Since the sealing members which are made of the same material are bonded to each other, the sealing operation is facilitated.

In addition, the positive and negative terminal plates and their respective sealing members cannot be simultaneously thermo-welded together in a single process.

In this case, therefore, the positive and negative terminal plates and the positive and negative sealing members are respectively laid one upon the other in position, and are hot-pressed at 160°C and under a pressure of 2 kg/cm² (196 KPa) for 3 seconds so that they are tentatively thermo-welded. At this point of time, the sealing members are only weakly bonded to the positive and negative terminal plates. Thereafter, the positive and negative terminal plates respectively having the sealing members tentatively thermo-welded thereto are heat-treated at 200°C for 10 minutes, whereby the sealing members and the positive and negative terminal plates are completely thermo-welded to one another, respectively.

It is difficult for the following reasons to heat seal the outer peripheral portion of the cell after it has been assembled in accordance with the procedure that the sealing member is mounted on the positive terminal plate, the positive active substance and the separator are successively mounted in the frame, and the negative terminal plate having lithium disposed on the inner side thereof is laid on the positive terminal plate in such a manner as to cover the contents of the cell. Namely, since the positive and negative terminal plates are made of a metal such as nickel or stainless steel, heat during heat sealing is dissipated. In addition, since the cell has already incorporated the contents thereof, heat during heat sealing is more transmitted and absorbed thereby.

To effect heat sealing despite this fact, it is only necessary to raise the temperature for heat sealing and extend the time for which pressure is applied. In such a case, however, the contents of the cell are heated excessively, and since the thermal expansion coefficient and the thermal shrinkage coefficient of the terminal plates and those of the sealing members are different from each other, the heat sealed portion along the outer periphery of the cell may be wrinkled, or the cell as a whole may be warped, disadvantageously.

For this reason, the sealing members in accordance with the arrangement may be respectively thermo-welded to the positive and negative terminal plates in advance.

Preferably the cell having been subjected to external shaving is discharged and then submitted to practical use, for example, being discharged for 6 minutes at 20 mA. The amount by which the cell is discharged before actual use is suitably selected to be about 5% of the theoretical capacity of the cell. Whether this discharge amount is suitable or not may be understood from the fact that the open-circuit voltage of the cell after use for 24 to 48 hours at room temperature is 3.0 to 3.1 V. The open-circuit voltage before the discharge is 3.38 to 3.44 V.

Flat plate type lithium cells according to the present invention, produced as detailed above, and cells having a conventional structure in which the positive and negative terminal plates have the same external dimensions, such as that shown in Japanese Published Patent Application No. 83340/1984, were prepared, and the number of cells having short-circuiting failure immediately after assembly were examined. Samples of the short-circuit test were limited to those having an open-circuit voltage of 3 V or less. The results are shown in Table 5:

Table 5

| | Ratio of failure (%) |
|---|---|
| Cell of the invention | 0% |
| Conventional cell | 62% |

As will be clear from Table 5, the conventional cells have an extremely large number of short-circuiting failures.

The following is an explanation of the reason why the discharge process is carried out after a cell according to the present invention has been assembled.

Table 6 is a table in which is shown open-circuit voltage of the cell ($V_{oc}/V$), internal resistance ($Ri/\Omega$) and the amount by which the cell of the present arrangement ($\Delta H/1 = 0.01$ mm) swells when it is processed at various discharge currents and various discharge periods of time.

The cell swell amount was obtained in such a manner that, after cells had been discharged under various conditions, they were stored under the conditions that the temperature was 80°C and the relative humidity (R.H.) was 90 to 95%, and the difference between the thickness of each cell before and after storage was measured every 5 days.

Table 6

| Discharge time (minute) / Storage (day) / Discharge current (mA) | | 2 | | | | 6 | | | |
|---|---|---|---|---|---|---|---|---|---|
| | | 0 | 5 | 10 | 15 | 0 | 5 | 10 | 15 |
| Voc (V) | 10 mA | 3.01 | 3.24 | 3.24 | 3.21 | 2.98 | 3.22 | 3.27 | 3.21 |
| | 15 | 3.00 | 3.25 | 3.28 | 3.20 | 2.97 | 3.22 | 3.26 | 3.17 |
| | 20 | 2.99 | 3.23 | 3.28 | 3.23 | 2.96 | 3.22 | 3.26 | 3.22 |
| Ri (Ω) | 10 | 23.7 | 116.7 | 260 | 400 | 21.7 | 105 | 240 | 253 |
| | 15 | 21.0 | 90.7 | 206.7 | 403.3 | 17.0 | 73.3 | 273.3 | 218.3 |
| | 20 | 18.0 | 83.7 | 250.0 | 400.0 | 14.0 | 26.0 | 83.3 | 160.0 |
| ΔH (1= 0.01 mm) | 10 | 0 | 5.8 | 17.8 | 33.7 | 0 | 1.5 | 5.7 | 21.0 |
| | 15 | 0 | 1.8 | 12.5 | 29.0 | 0 | 1.5 | 4.2 | 16.2 |
| | 20 | 0 | 1.8 | 10.3 | 27.5 | 0 | 1.7 | 1.7 | 10.3 |

As will be clear from Table 6, a discharge current of 20 mA is most effective in minimising the swell of the cell. As to the discharge time, 6 minutes is more effective than 2 minutes in minimising the bulge of the cell.

The bulge of the cell is decreased by increasing the discharge current and extending the discharge time as described above.

It is presumed that the storage of a cell for 5 days at 80°C and R.H. 90% corresponds to the storage of a cell for 1 year at 25°C. Therefore, the conditions of 20 mA and 6 minutes or more are suitable for satisfying the condition in which the amount of swell of the cell is 5 or less after the storage of 15 days, i.e. for 3 years at 25°C. The amount of discharge as a result of discharging the cell at 20 mA for 6 minutes is 2 mAh, which corresponds to 5.2% of the theoretical cell capacity of CS2328 (open-circuit voltage: 3 V, nominal capacity: 30 mAh, and size: 23 x 28 x 0.5 mm) to which one embodiment of the flat plate type lithium cell according to the present invention is applied.

It is presumed that an increase in the discharge amount stabilises $MnO_2$ in the positive mixture sheet and consequently reduces the amount of $CO_2$ generated by the reaction between $MnO_2$ and the electrolyte. However, if the cell is excessively discharged, the cell capacity is decreased inconveniently. Accordingly, it is necessary appropriately to balance the discharge amount and the bulge of the cell.

As has been described above in detail, a two-material three-layer film composed of maleic acid modified polyethylene and a high-density polyethylene resin is employed as a sealing member, and this sealing member is thermo-welded to each of the positive and negative terminal plates in advance, whereby it is possible to effect heat sealing readily and reliably and to improve the sealing properties by a relatively large margin.

**Claims**

1. A flat cell comprising a positive terminal plate (1), positive material (3), a separator (4), an electrolyte, a negative material (5), a sealing member (2, 7) between a negative terminal plate (6) and the positive terminal plate (1), characterised in that said sealing member is a two material three-layer film formed from a maleic acid modified polyethylene resin/a high density polyethylene resin/a maleic acid modified polyethylene resin, the graft ratio of maleic acid being 0.05% to 0.2%, the maleic acid modified polyethylene resin layers each having a thickness of at least 20 μm.

2. A flat cell as claimed in claim 1 characterised in that said maleic acid modified polyethylene resin is an intermediate density polyethylene which is graft polymerised with 0.05 to 0.2% maleic acid.

3. A flat cell as claimed in claim 1 or 2 characterised in that the maleic acid modified polyethylene resin in said sealing member has a thickness from 25 to 30 μm, and the high density polyethylene resin in said sealing member has a thickness of 50 to 200 μm.

4. A flat cell as claimed in any preceding claim characterised in that said two material three-layer film is produced by an inflation method.

5. A flat cell as claimed in any preceding claim characterised in that said positive material (3) is manganese dioxide ($MnO_2$), said electrolyte is lithium chlorate ($LiClO_4$/PC), and said negative material is lithium.

6. A flat cell as claimed in any preceding claim characterised in that said positive terminal plate (1) and negative terminal plate (6) have different external dimensions.

7. A flat cell as claimed in any preceding claim characterised in that said separator (4) is constituted by two strips of polypropylene non-woven fabric.

8. A flat cell as claimed in claim 7 characterised in that said separator (4) is produced by micro-spunbond.

9. A flat cell as claimed in any preceding claim characterised in that said sealing member (2, 7) clamps said separator (4).

10. A method of manufacturing a flat cell as claimed in claim 1 characterised by comprising the steps of: (a) thermo-welding a first sealing member (7) to the peripheral portion of an inner surface of the negative terminal plate (6); (b) contact bonding a lithium foil (5) to said negative terminal plate; (c) mounting the separator (4) on said lithium foil; (d) mounting a positive material sheet (3) on said separator (4) after said sheet has been dipped in the electrolyte; (e) thermo-welding a second sealing member (2) to the positive terminal plate (1); (f) mounting said positive terminal plate (1) on said positive material sheet (3); and (g) thermo-welding said first sealing member (7) and the second sealing member (2), thereby hermetically sealing the flat cell.

11. A method as claimed in claim 10 characterised in that said separator (4) is constituted by two strips of polyethylene non-woven fabric.

12. A method as claimed in claim 10 or 11 characterised in that said positive material (3) is reacted with an electrolyte.

13. A method as claimed in claim 12 characterised in that the reaction is at 100 to 120°C for 15 hours.

14. A method as claimed in any of claims 10 to 13 characterised by including the step of external shaving after said cell has been asembled and sealed.

15. A method as claimed in any of claims 10 to 14 characterised by including the step of discharging the cell preliminarily after it has been assembled and sealed.

16. A method as claimed in claim 15 characterised in that the amount by which said cell is discharged is about 5% of its theoretical capacity.

17. A method as claimed in any of claims 10 to 16 characterised in that said positive and negative terminal plates (1, 6) are subjected to drawing.

## Patentansprüche

1. Flache Zelle mit einer positiven Anschlußplatte (1), positivem Material (3), einem Trennelement (4), einem Elektrolyten, einem negativen Material (5) sowie einem Dichtungselement (2, 7) zwischen einer negativen Anschlußplatte (6) und der positiven Anschlußplatte (1), dadurch gekennzeichnet, daß das Dichtungselement ein dreischichtiger Film aus zwei Materialien ist, der aus mit Maleinsäure modifiziertem Polyethylenharz/hochdichtem Polyethylenharz mit Maleinsäure modifiziertem Polyethylenharz gebildet ist, daß das Pfropfverhältnis der Maleinsäure gleich 0,05% bis 0,2% ist und daß die Schichten aus mit Maleinsäure modifiziertem Polyethylenharz jeweils eine Dicke von wenigstens 20 µm besitzen.

2. Flache Zelle nach Anspruch 1, dadurch gekennzeichnet, daß das mit Maleinsäure modifizierte Polyethylenharz ein Polyethylen mittlerer Dichte ist, das mit 0,05 bis 0,2% Maleinsäure pfropfpolymerisiert ist.

3. Flache Zelle nach Anspruch 1 oder 2, dadurch gekennzeichnet, daß das mit Maleinsäure modifizierte Polyethylenharz im Dichtungselement eine Dicke von 25 bis 30 µm besitzt und daß das hochdichte Polyethylenharz im Dichtungselement eine Dicke von 50 bis 200 µm besitzt.

4. Flache Zelle nach den vorhergehenden Ansprüchen, dadurch gekennzeichnet, daß der dreischichtige Film aus zwei Materialien durch ein Füllverfahren hergestellt ist.

5. Flache Zelle nach den vorhergehenden Ansprüchen, dadurch gekennzeichnet, daß das positive Material (3) Magnesiumdioxid ($MnO_2$), der Elektrolyt Lithiumchlorat ($LiClO_4$/PC) und das negative Material Lithium ist.

6. Flache Zelle nach den vorhergehenden Ansprüchen, dadurch gekennzeichnet, daß die positive Anschlußplatte (1) und die negative Anschlußplatte (6) unterschiedliche äußere Abmessungen besitzen.

7. Flache Zelle nach den vorhergehenden Ansprüchen, dadurch gekennzeichnet, daß das Trennelement (4) aus nicht verwobenem Polypropylen-Stoff gebildet ist.

8. Flache Zelle nach Anspruch 7, dadurch gekennzeichnet, daß das Trennelement (4) durch Mikrospinnbinden hergestellt ist.

9. Flache Zelle nach den vorhergehenden Ansprüchen, dadurch gekennzeichnet, daß das Dichtungselement (2, 7) das Trennelement (4) einklemmt.

10. Verfahren zur Herstellung einer flachen Zelle nach Anspruch 1, gekennzeichnet durch folgende Schritte: (a) Thermoschweißen eines ersten Dichtungselementes (7) an dem Umfangsteil einer Innenfläche der negativen Anschlußplatte (6), (b) Kontaktbinden einer Lithiumfolie (5) an die negative Anschlußplatte, (c) Montieren des Trennelementes (4) auf der Lithiumfolie, (d) Montieren einer positiven Materialschicht (3) auf dem Trennelement (4) nach dem Eintauchen der Schicht in den Elektrolyten, (e) Thermoschweißen eines zweiten Dichtungselementes (2) an die positive Anschlußplatte (1), (f) Montieren der positiven Anschlußplatte (1) auf der positiven Materialschicht (3), und (g) Thermoschweißen des ersten Dichtungselementes (7) an das zweite Dichtungselement (2), wodurch die flache Zelle hermetisch abgedichtet wird.

11. Verfahren nach Anspruch 10, dadurch gekennzeichnet, daß das Trennelement durch zwei Streifen aus nicht verwobenem Polyethylen-Stoff gebildet wird.

12. Verfahren nach Anspruch 10 oder 11, dadurch gekennzeichnet, daß das positive Material (3) mit einem Elektrolyten zur Reaktion gebracht wird.

13. Verfahren nach Anspruch 12, dadurch gekennzeichnet, daß die Reaktion bei 100 bis 120°C für 15 Stunden andauert.

14. Verfahren nach den Ansprüchen 10 bis 13, dadurch gekennzeichnet, daß nach dem Zusammenbau und dem Abdichten der Zelle ein äußeres Abschaben durchgeführt wird.

15. Verfahren nach den Ansprüchen 10 bis 14, dadurch gekennzeichnet, daß die Zelle nach dem Zusammenbau und Abdichten vorläufig entladen wird.

16. Verfahren nach Anspruch 15, dadurch gekennzeichnet, daß der Betrag, um den die Zelle entladen wird, etwa 5% ihrer theoretischen Kapazität beträgt.

17. Verfahren nach den Ansprüchen 10 bis 16, dadurch gekennzeichnet, daß die positive und die negative Anschlußplatte (1, 6) einem Ziehen unterworfen werden.

## Revendications

1. Une pile plate comprenant une plaquette de borne positive (1), un matériau positif (3), un séparateur (4), un électrolyte, un matériau négatif (5), un élément de scellement (2, 7) entre une plaquette de borne négative (6) et la plaquette de borne positive (1), caractérisée en ce que l'élément de scellement consiste en une pellicule à trois couches de deux matériaux qui est formée à partir d'une résine de polyéthylène modifié par de l'acide maléïque/une résine de polyéthylène haute densité/une résine de polyéthylène modifié par de l'acide maléïque, le rapport de greffage de l'acide maléïque étant de 0,05% à 0,2%, et

chacune des couches de résine de polyéthylène modifié par de l'acide maléïque ayant une épaisseur d'au moins 20 µm.

2. Une pile plate selon la revendication 1, caractérisée en ce que la résine de polyéthylène modifié par de l'acide maléïque est un polyéthylène à densité intermédiaire qui est polymérisé par greffage avec 0,05 à 0,2% d'acide maléïque.

3. Une pile plate selon la revendication 1 ou 2, caractérisée en ce que la résine de polyéthylène modifié par de l'acide maléïque dans l'élément de scellement a une épaisseur comprise entre 25 et 30 µm, et la résine de polyéthylène haute densité dans l'élément de scellement a une épaisseur de 50 à 200 µm.

4. Une pile plate selon l'une quelconque des revendications précédentes, caractérisée en ce que la pellicule à trois couches de deux matériaux est fabriquée par un procédé de soufflage.

5. Une pile plate selon l'une quelconque des revendications précédentes, caractérisée en ce que le matériau positif (3) est du dioxyde de manganèse ($MnO_2$), l'électrolyte est du chlorate de lithium ($LiClO_4/PC$), et le matériau négatif est du lithium.

6. Une pile plate selon l'une quelconque des revendications précédentes, caractérisée en ce que la plaquette de borne positive (1) et la plaquette de borne négative (6) ont des dimensions extérieures différentes.

7. Une pile plate selon l'une quelconque des revendications précédentes, caractérisée en ce que le séparateur (4) est constitué par deux bandes de non-tissé consistant en polypropylène.

8. Une pile plate selon la revendication 7, caractérisée en ce que le séparateur (4) est fabriqué par micro-fixation de monofils continus désorientés.

9. Une pile plate selon l'une quelconque des revendications précédentes, caractérisée en ce que l'élément de scellement (2, 7) bloque le séparateur (4).

10. Un procédé de fabrication d'une pile plate selon la revendication 1, caractérisé en ce qu'il comprend les opérations suivantes: (a) on fixe par thermo-soudage un premier élément de scellement (7) sur la partie périphérique d'une surface intérieure de la plaquette de borne négative (6); (b) on fixe par contact une feuille de lithium (5) sur la plaquette de borne négative; (c) on monte le séparateur (4) sur la feuille de lithium; (d) on monte une couche de matériau positif (3) sur le séparateur (4), après avoir plongé cette couche dans l'électrolyte; (e) on fixe par thermo-soudage un second élément de scellement (2) sur la plaquette de borne positive (1); (f) on monte la plaquette de borne positive (1) sur la couche de matériau positif (3); et (g) on fixe par thermo-soudage le premier élément de scellement (7) et le second élément de scellement (2), pour sceller ainsi hermétiquement la pile plate.

11. Un procédé selon la revendication 10, caractérisé en ce que le séparateur (4) est constitué par deux bandes de non-tissé consistant en polypropylène.

12. Un procédé selon la revendication 10 ou 11, caractérisé en ce qu'on fait réagir le matériau positif (3) avec un électrolyte.

13. Un procédé selon la revendication 12, caractérisé en ce que la réaction a lieu à une température de 100 à 120°C pendant 15 heures.

14. Un procédé selon l'une quelconque des revendications 10 à 13, caractérisé en ce qu'il comprend l'opération de détourage externe de la pile, après que cette dernière a été assemblée et scellée.

15. Un procédé selon l'une quelconque des revendications 10 à 14, caractérisé en ce qu'il comprend l'opération qui consiste à décharger la pile de façon préliminaire après qu'elle a été assemblée et scellée.

16. Un procédé selon la revendication 15, caractérisé en ce que la valeur de la décharge de la pile est d'environ 5% de sa capacité théorique.

17. Un procédé selon l'une quelconque des revendications 10 à 16, caractérisé en ce qu'on applique une opération d'emboutissage aux plaquettes de bornes positive et négative (1, 6).

FIG.1

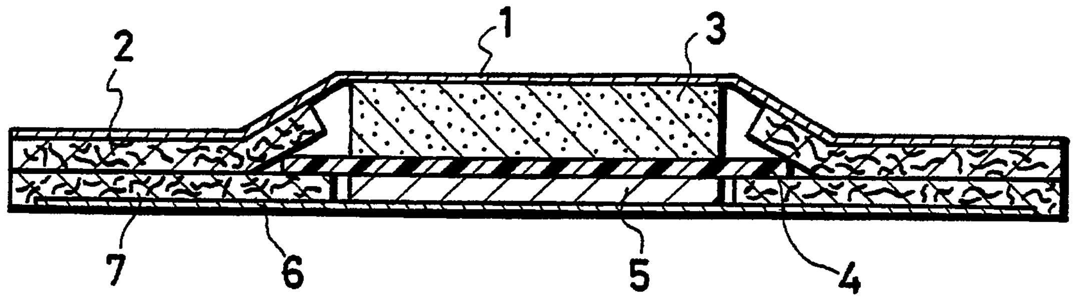

FIG.2

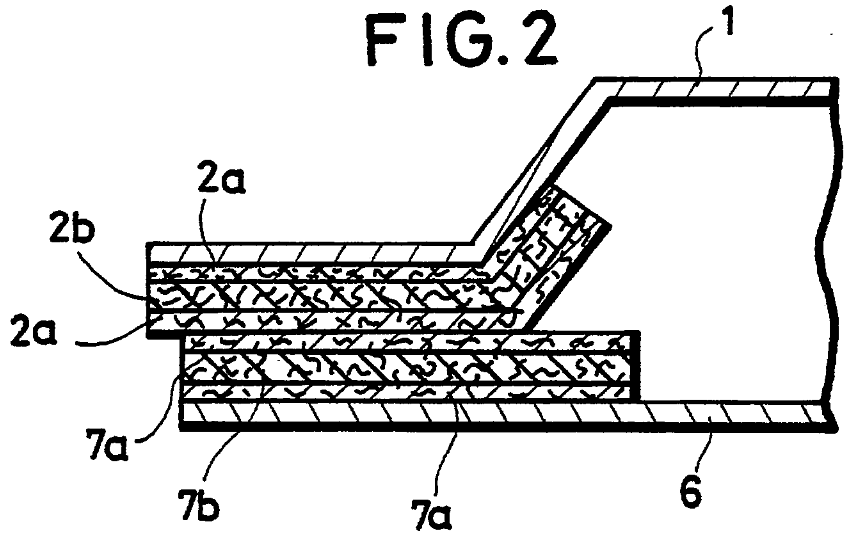

FIG.3(B)

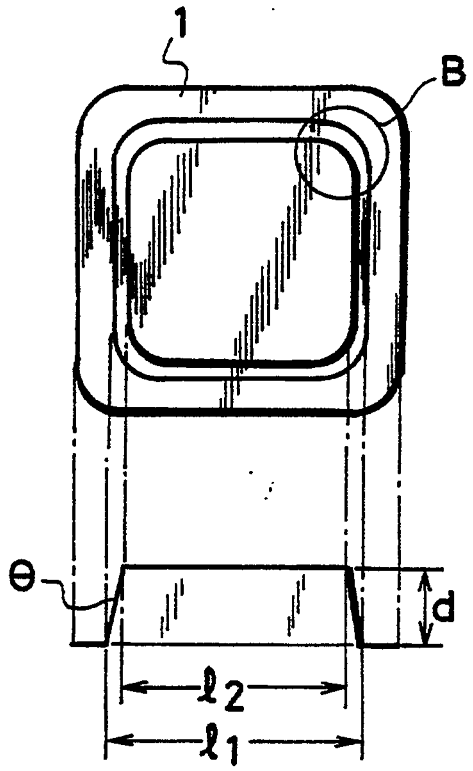

FIG.3(A)

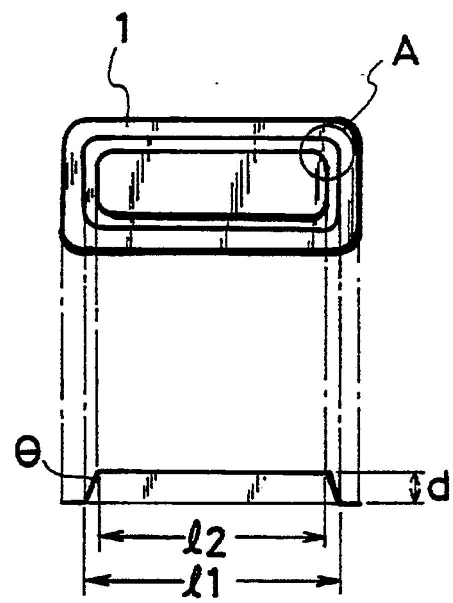

FIG. 4

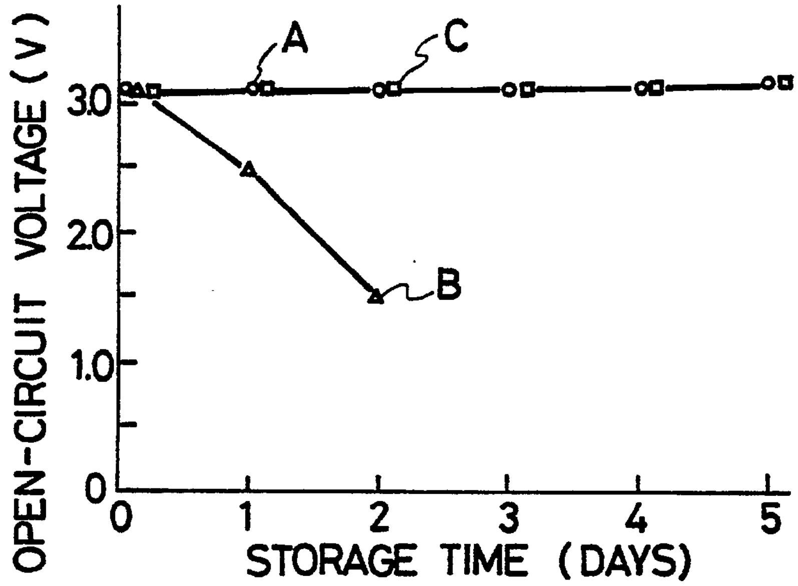
OPEN-CIRCUIT VOLTAGE (V)
3.0
2.0
1.0
0
A
C
B
0
1
2
3
4
5
STORAGE TIME (DAYS)

FIG. 5

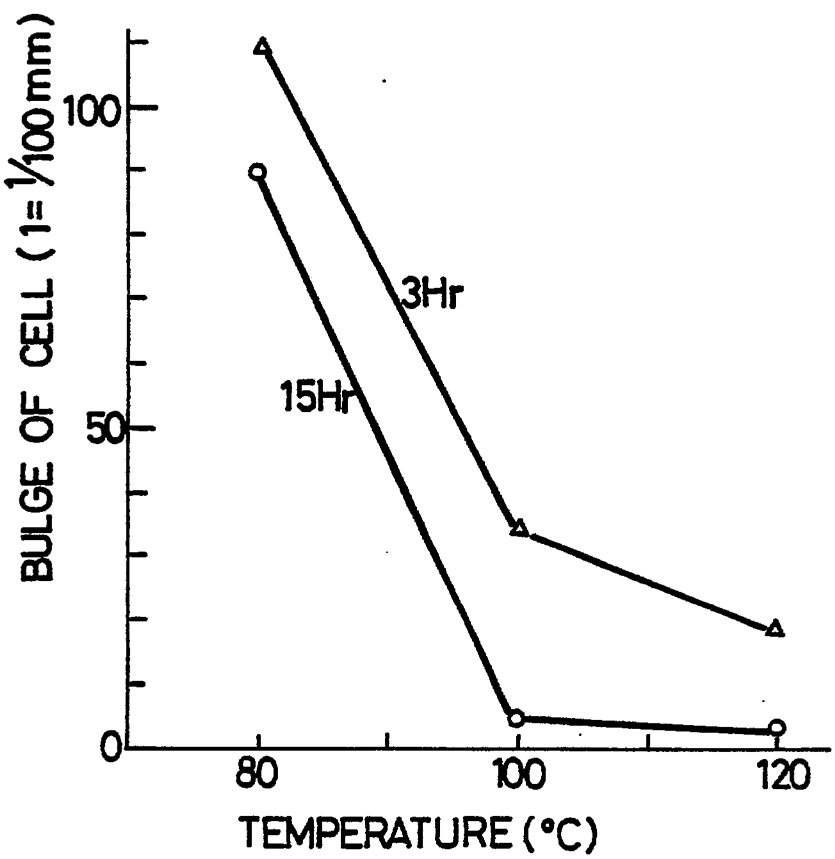
BULGE OF CELL (1= 1/100 mm)
100
50
0
3Hr
15Hr
80
100
120
TEMPERATURE (°C)

FIG.6

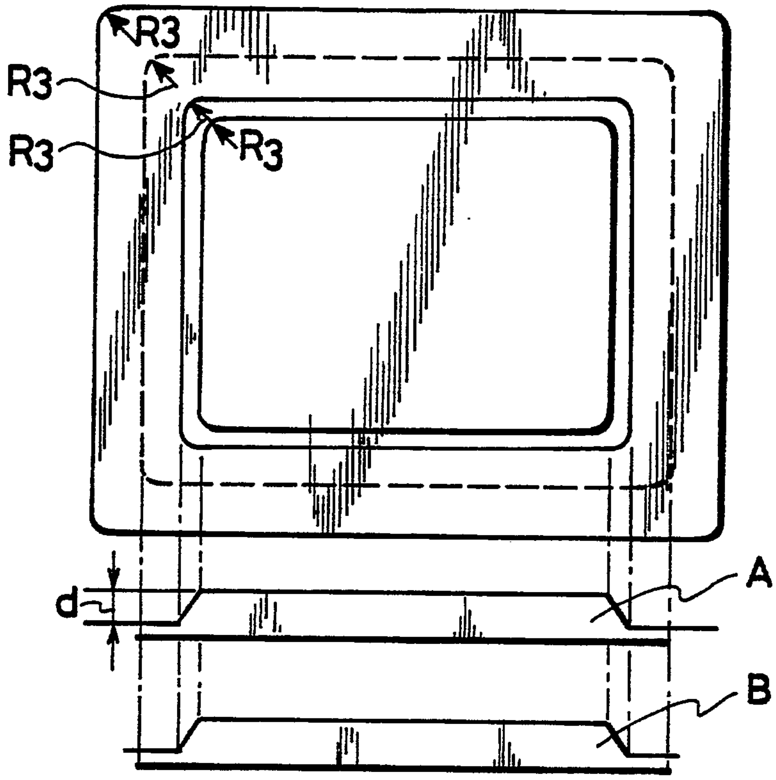


FIG.7